# EUROPEAN PATENT APPLICATION

(11) **EP 4 704 363 A1**
(43) Date of publication of application: **04.03.2026**
(21) Application number: 24197682.8
(22) Date of filing: 30.08.2024
(51) Int. Cl.: H04L 9/00

(54) **METHOD FOR VERIFYING ATTESTATION IN A NETWORK AND NETWORK**

(71) Applicant: Siemens Aktiengesellschaft, 80333 München (DE)
(72) Inventor: Falk, Rainer, 85435 Erding (DE); Feist, Christian Peter, 80689 München (DE); Hornung, Peter, 91054 Erlangen (DE); Kumari, Ankita, 81549 München (DE); Mantel, Martin, 91325 Adelsdorf (DE); Piccoli, Alessandro, 80333 München (DE); Pyka, Stefan, 85570 Markt Schwaben (DE); Sperl, Franz, 92526 Oberviechtach (DE); Zeschg, Thomas, 81543 München (DE)
(74) Representative: Siemens Patent Attorneys

(57) **Abstract**

In the method for verifying attestation in a network, verifying is conducted with an intermediate verifier (IV) that is configured to verify an intermediate attestation report from an immediate verifier and configured to then forward the verification result and receiving the verification result.

The network is configured to carry out this method.

## Description

The invention relates to a method for verifying attestation in a network and to a network

Remote attestation refers to technical approaches for confirming a system or device property to a relying party in a reliable way. The aim is to provide robust assurance about specific system or device properties, to support a relying party in determining whether the system or device can be trusted. This involves several steps, including the collection, also referred to as "measurement", of device attribute claims, e.g., cryptographic measurements of firmware and configuration and/or key storage properties, and providing this information in a cryptographically protected manner called "attestation", and verifying, also referred to as validating, the information by a relying party, and performing an action based on the result.

In the known attestation use cases, the usual setup of performing attestation of measurement data is done by the definition of a certain attestation component, a verifier component, and a relying party. Depending on the technical capability of the corresponding devices, on the actual underlying infrastructure or also existing security requirements this simple approach might not fit or is not applicable in certain scenarios.

There is a need to support a more flexible attestation validation process, addressing e.g., different types of network topologies or security domains where the central or main validation or verifier components do not have access to all reference values or cannot process the verification of the whole attestation on its own. The customer should thus be able to adapt the attestation infrastructure in an easy way according to his actual environment.

Thus, it is the aim of the present invention to provide an improved method for verifying attestation in a network. Furthermore, it is the aim of the present invention to provide an improved network that could implement an improved method for verifying attestation.

These aims of the present invention are fulfilled with a method for verifying attestation in a network comprising the features claimed in claim 1 of the present invention, and with a network with the features claimed in claim 9 of the present invention.

The method according to the invention is a method for verifying attestation in a network. The method according to the invention includes conducting verification with an intermediate verifier that is configured to verify an intermediate attestation report from an immediate verifier and configured to then forward the verification result and receiving the verification result.

The method according to the invention offers several advantages. The method allows for a more flexible attestation architecture that can adapt to various network topologies and security domains. The intermediate verifier can handle verification tasks that the main verifier may not be able to perform due to network constraints, protocol incompatibilities, or lack of access to necessary reference values. This enhances the overall security and reliability of the attestation process in complex network environments.

In an advantageous aspect of the method according to the invention, the method includes making a trust decision based on the verification result. In this aspect of the invention, a trust decision may be based on the successful verification of an attestation within the network, thus enabling secure operations within the network.

The method may involve forwarding the verification result using encrypted communication, thus further enhancing the security of the attestation process and preventing unauthorized access to or man-in-the-middle attacks on sensitive verification information.

In a particularly useful aspect of the method according to the invention, the verification result, when forwarded, does not contain or is not accompanied by the whole attestation report.

The method according to an advantageous aspect of the invention is conducted when the immediate verifier cannot reliably communicate in the same protocol as the entity the intermediate verifier forwards the verification result to. This aspect of the invention allows seamless integration of diverse devices and systems with different communication protocols.

The method may be conducted when reference values needed for verification are not reliably contained in the attestation report. This feature addresses scenarios where attestation reports may not include all necessary reference values.

The method may be conducted when reference values needed for verification are not accessible to the entity the intermediate verifier forwards the verification result to.

The method may be carried out by a higher-level verifier. In this aspect of the invention, a truly hierarchical verification and attestation structure is supported. This enables scalable and flexible verification and attestation architectures that can adapt to complex organizational structures and diverse network topologies.

The network according to the invention is configured to carry out the method according to the invention as described above. The network may be a manufacturing network.

In the following, the method according to the invention is illustrated with the help of the accompanying drawing.
- Fig. 1: shows a network, in which an attester cannot access sensors in a network segment in a schematic drawing,
- Fig. 2: shows a network according to the invention that is configured to carry out the method according to the invention in a first embodiment in a schematic drawing and
- Fig. 3: shows a network according to the invention that is configured to carry out the method according to the invention in a second embodiment in a schematic drawing.

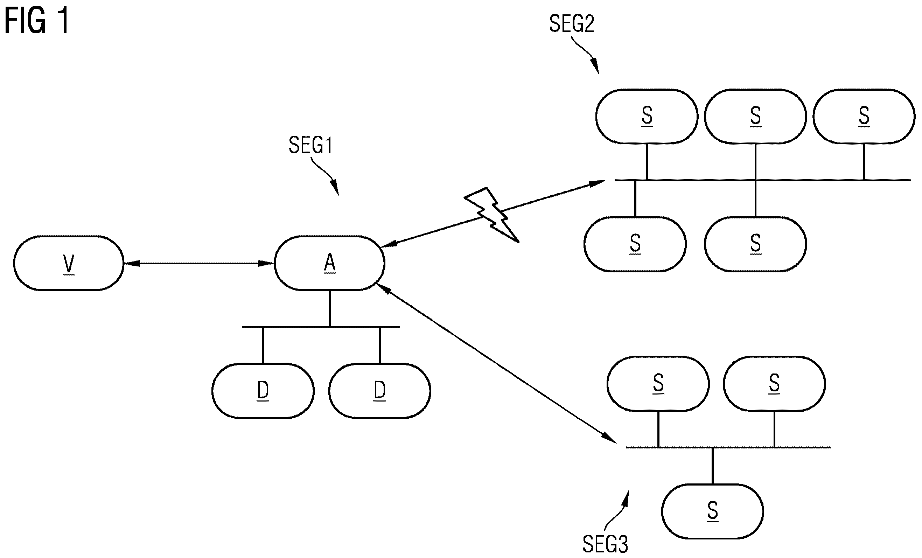

The depicted network in Fig. 1 is a manufacturing network, that comprises a topology connecting devices D and sensors S with each other. The devices D could be manufacturing devices such as drillers together with a drilling control. The sensors S could be optical sensors for arranging, positioning, transferring and inspecting raw material, that has to be drilled subsequently.

The network comprises a hierarchical set of Attesters A and verifiers V. The need for attesting data and verifying data is caused by the needs to ensure safety within the manufacturing network. Malicious sensing data of the sensors S for example may cause the drilling controls to malfunction and accordingly mistreated parts could damage parts of the manufacturing network or the environment of the manufacturing network.

The situation depicted in Fig. 1 shows a particular issue causing a specific need of the depicted network:

Here, the attester A in segment 1 SEG1 of the network is in principle able to access sensors S in segment 3 SEG3 of the network. However, the attester A is not able to access sensors S in segment 2 SEG2 of the network. Thus, a particular solution is needed when verification with respect to segment 2 SEG2 of the network is concerned.

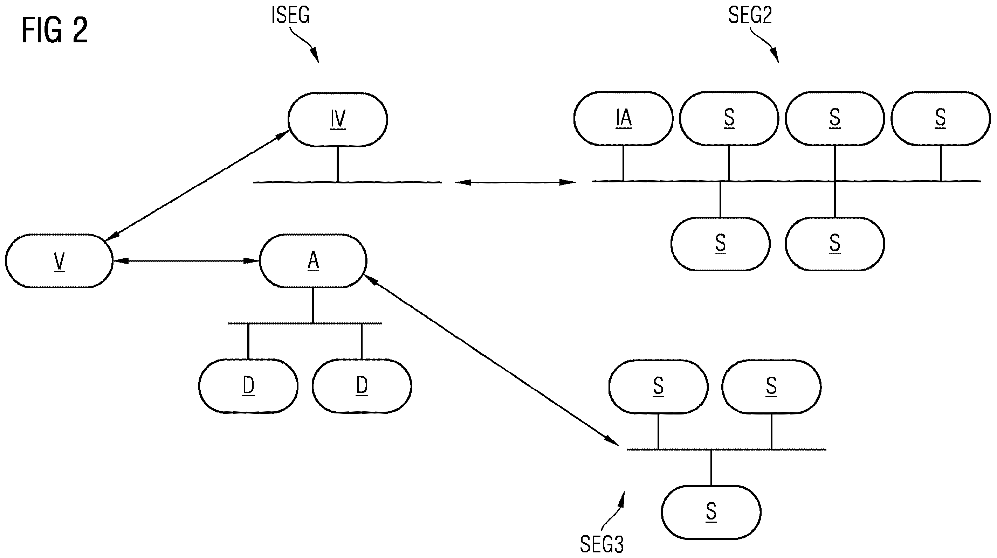

The solution to this situation is depicted in Fig. 2.

As shown in Fig. 2, an intermediate network segment ISEG is used that has both access to the segment 2 SEG2 of the network and to the verifier V. In this configuration, the intermediate attester IA and an intermediate verifier IV take over the task and transfer the verification result to the verifier V.

Here, the intermediate verifier IV can check an intermediate attestation report and then just forward the verification result instead of the whole attestation report.

A similar situation may for example also arise, when the verifier V is not able to verify the attestation of one or several sub-components in the form of sensors S, e.g., due to the missing capability of a certain verification functionality. An intermediate verifier IV can take over the verification of the sub-component attestation and just hand over the verification result to the verifier V on the next higher level. This transmission can optionally be cryptographically secured e.g., by using a TLS channel or cryptographic signatures or checksums. This solution leads to the same scenario as depicted in Fig. 2.

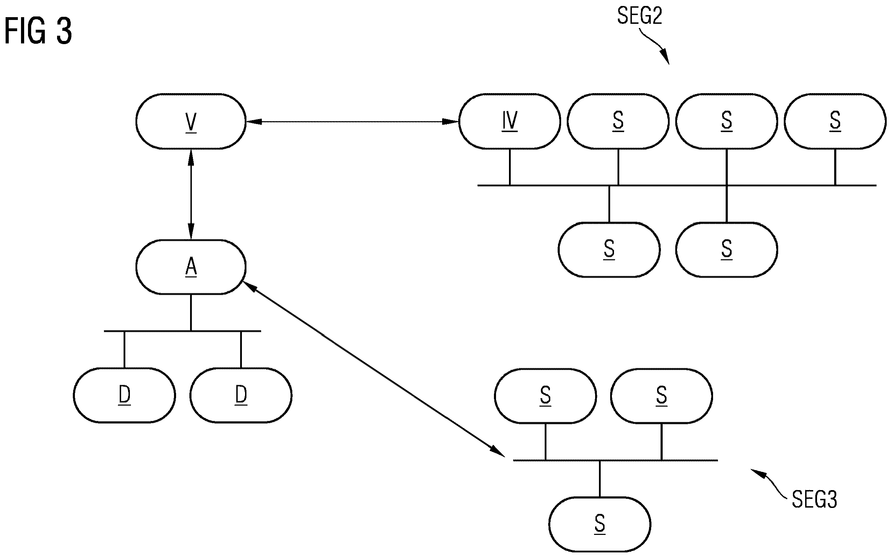

Furthermore, if the verifier V has no access to reference values in order to perform the verification of an attestation result, e.g., because the reference values are not contained in the attestation report but have to be retrieved from lower-level components, an intermediate verifier IV that is in contact with the segment 2 SEG2 of the network can solve this issue by accepting data from the sensors S as local attestation reports and forwarding the verification result to the verifier V, as depicted in Fig. 3.

## Claims

1. Method for verifying attestation in a network, in which verifying is conducted with an intermediate verifier (IV) that is configured to verify an intermediate attestation report from an immediate verifier and configured to then forward the verification result and the verification result is received.

2. Method according to the previous claim, which involves making a trust decision based on the verification result.

3. Method according to one of the previous claims, in which the forwarding is conducted using encrypted communication.

4. Method according to one of the previous claims, in which the verification result, when forwarded, does not contain or is not accompanied by the whole attestation report.

5. Method according to one of the previous claims, which is conducted when the immediate verifier cannot reliably communicate in the same protocol as the entity the intermediate verifier (IV) forwards the verification result to.

6. Method according to one of the previous claims, which is conducted when reference values needed for verification are not reliably contained in the attestation report.

7. Method according to one of the previous claims, which is conducted when reference values needed for verification are not accessible to the entity the intermediate verifier (IV) forwards the verification result to.

8. Method according to one of the previous claims, in which is carried out by a higher-level verifier (V).

9. Network, configured to carry out the method according to one of the previous claims.

10. Network according to the previous claim, which is a manufacturing network.
